Europäisches Patentamt

European Patent Office

Office européen des brevets

(19)

(11) Numéro de publication: **0 190 072**
**B1**

(12) **FASCICULE DE BREVET EUROPEEN**

(45) Date de publication du fascicule du brevet:
02.05.90

(51) Int. Cl.⁴: **G21C 1/02**, G21C 7/00,
G21C 5/20

(21) Numéro de dépôt: 86400100.3

(22) Date de dépôt: 20.01.86

(54) **Coeur de réacteur nucléaire à neutrons rapides comportant un seul type d'assemblages de combustible nucléaire.**

(30) Priorité: 29.01.85 FR 8501203
25.04.85 FR 8506328

(43) Date de publication de la demande:
06.08.86 Bulletin 86/32

(45) Mention de la délivrance du brevet:
02.05.90 Bulletin 90/18

(84) Etats contractants désignés:
BE DE FR GB IT NL

(56) Documents cités:
EP-A- 0 057 529
EP-A- 0 066 264
FR-A- 1 565 786
FR-A- 2 300 398
FR-A- 2 321 174
GB-A- 976 802
GB-A- 1 060 999

(73) Titulaire: FRAMATOME, Tour Fiat 1, Place de la Coupole,
F-92400 Courbevoie(FR)

(72) Inventeur: Clauzon, Pierre, 11 rue Georges Bizet,
F-92330 Sceaux(FR)
Inventeur: Sztark, Henri, 1 Square des roses,
F-92370 Verriere Le Buisson(FR)

(74) Mandataire: Mongrédien, André et al, c/o
BREVATOME 25, rue de Ponthieu, F-75008 Paris(FR)

ACTORUM AG

## Description

La présente invention se rapporte à un coeur de réacteur nucléaire à neutrons rapides dont les assemblages de combustible nucléaire sont tous identiques.

Dans la zone centrale fissile du coeur d'un réacteur nucléaire à neutrons rapides, on cherche à obtenir une répartition radiale des puissances relativement uniforme depuis le centre du coeur jusqu'à la périphérie de la zone fissile. En effet, ce type de répartition confère au réacteur un rendement optimum, tout en permettant de maintenir la puissance en tout point du coeur en-dessous d'un seuil critique à ne pas dépasser. En pratique, une telle distribution de puissance ne peut toutefois pas être atteinte, car la réactivité est naturellement plus forte au centre du coeur que dans les parties périphériques de la zone fissile.

Afin de résoudre en partie ce problème, on réalise habituellement la zone fissile au moyen d'au moins deux types d'assemblages de combustible nucléaire différents, des assemblages à forte réactivité étant placés en périphérie de la zone fissile alors que des assemblages à plus faible réactivité sont placés au centre de cette zone.

Une première solution connue pour réaliser des assemblages présentant des réactivités différentes consiste à modifier le pourcentage de matière inerte par rapport à la matière fissile contenue dans ces assemblages, de telle sorte que ce pourcentage soit plus faible au centre du coeur qu'à la périphérie de la zone fissil.

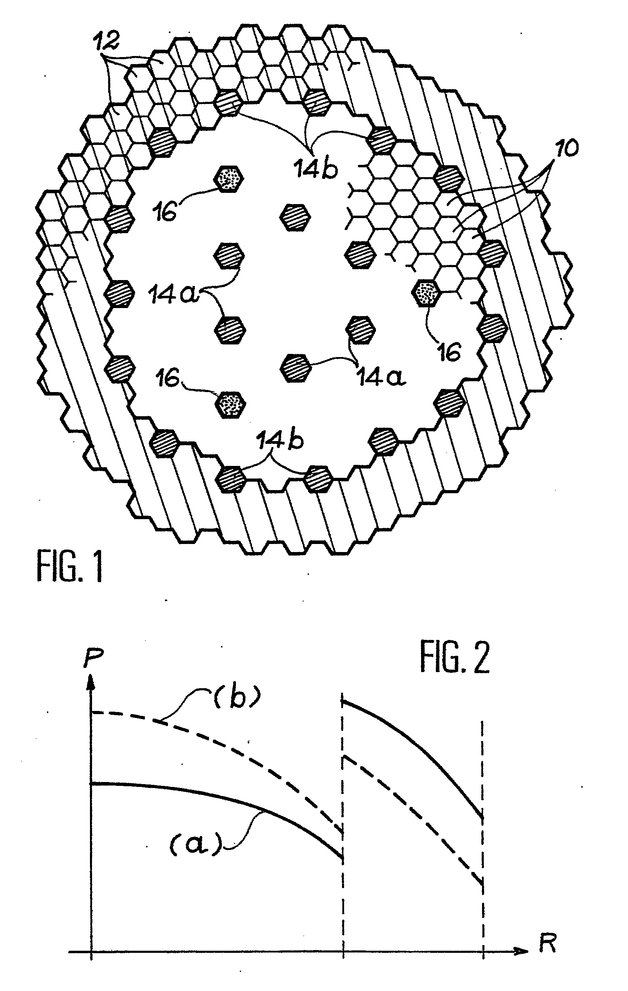

Une autre solution pour réaliser des assemblages présentant des réactivités différentes consiste à modifier l'enrichissement de la matière combustible contenue dans ces assemblages, de telle sorte que l'enrichissement des assemblages placés au centre du coeur soit plus faible que l'enrichissement des assemblages placés à la périphérie de la zone fissile. La zone fissile d'un coeur de réacteur nucléaire à neutrons rapides réalisé de cette manière est représentée sur la figure 1. Cette conception de coeur correspond au coeur du réacteur nucléaire à neutrons rapides Super-Phénix.

On voit sur la figure 1 que les assemblages 10 constituant la partie centrale de la zone fissile du coeur d'un tel réacteur sont d'un type différent des assemblages 12 situés à la périphérie de cette zone fissile. Ainsi, dans l'exemple de la centrale nucléaire Super-Phénix, la proportion de dioxyde de plutonium enrichi $PuO_2$ par rapport à l'ensemble constitué par le dioxyde de plutonium $PuO_2$ et par le dioxyde d'uranium $UO_2$ représente, dans les assemblages 10 de la partie centrale, environ 14% en volume, alors que cette proportion est d'environ 18% en volume pour les assemblages périphériques 12.

Dans le coeur d'un réacteur ainsi réalisé, la présence de deux zones fissiles présentant des enrichissements différents entraîne des variations locales dans les gains de régénération interne. Comme l'illustre la figure 2, qui représente en (a) la distribution radiale R des puissances P dans la partie fissile du coeur lorsque les assemblages de combustible nucléaire sont neufs et en (b) la même distribution radiale des puissances à la fin d'un cycle d'irradiation de ces assemblages, il en résulte une variation importante des puissances locales au cours d'un cycle du combustible.

Afin de compenser cette modification dans le temps des puissances dissipées par les assemblages de combustible nucléaire dans les coeurs de réacteur réalisés de cette manière, on utilise les assemblages de commande ou de pilotage du réacteur. De façon plus précise, ces assemblages de pilotage sont disposés en deux rideaux concentriques, 14a, 14b, le premier rideau 14a étant placé dans la zone centrale constituée par les assemblages 10 et le deuxième rideau 14b étant placé à la limite entre la zone centrale et la zone périphérique constituée par les assemblages 12. Pour compenser l'accroissement de puissance dans la zone centrale en cours de cycle illustré par la figure 2, on enfonce progressivement dans cette zone les assemblages de pilotage 14 constituant le premier rideau au fur et à mesure que le temps d'irradiation des assemblages de combustible nucléaire 10 s'accroît. A l'inverse, on compense la diminution de puissance en cours de cycle dans la zone périphérique en enfonçant en partie les assemblages de pilotage 14 du deuxième rideau en début de cycle et en diminuant peu à peu cet enfoncement au cours du cycle.

Cette compensation de la variation des puissances en cours de cycle nécessite de prévoir un nombre important d'assemblages de pilotage 14a, 14b afin que l'on puisse disposer d'une réserve d'anti-réactivité suffisante pour assurer par ailleurs le pilotage du réacteur à tout moment du cycle à l'aide de ces mêmes assemblages 14.

Pour mémoire, on a également représenté sur la figure 1 les trois assemblages 16 en matériau absorbant les neutrons qui sont placés dans la partie centrale de la zone fissile et dont la chute dans le coeur commande l'arrêt immédiat du réacteur.

En plus des inconvénients liés à la variation importante des puissances du coeur en cours de cycle inhérents aux coeurs dans lesquels des assemblages de combustible nucléaire présentant au moins deux réactivités différentes sont utilisés, l'existence d'assemblages différents dans cette zone nécessite de grandes précautions dans la manutention du combustible et pose des problèmes de gestion assez complexes, notamment afin d'éviter qu'un assemblage de forte réactivité soit placé dans la partie centrale de la zone fissile ou, inversement, qu'un assemblage de faible réactivité soit placé dans la partie périphérique de cette zone.

L'invention a précisément pour objet un cœur de réacteur nucléaire à neutrons rapides dont la zone centrale fissile ne comprend qu'un seul type d'assemblages de combustible nucléaire, l'enrichissement en matière fissile étant uniforme dans toute cette zone.

A cet effet, il est proposé conformément à l'invention un cœur de réacteur nucléaire à neutrons rapides comprenant une zone fissile constituée d'assemblages de combustible nucléaire parmi lesquels sont régulièrement répartis des trous de passage pour des barres de pilotage et d'arrêt réalisées en un matériau absorbant les neutrons, lesdits assemblages étant juxtaposés et disposés selon un réseau régulier, caractérisé en ce que la zone fissile est constituée d'assemblages identiques et notamment à enrichissement unique, des éléments réduisant localement la réactivité étant régulièrement répartis parmi les assemblages dans une partie centrale de la zone fissile, cette partie centrale étant considérée selon une direction radiale par rapport au centre de la zone fissile, afin de réduire la réactivité dans cette partie centrale.

Grâce à ces caractéristiques, une bonne distribution des éléments de dilution des neutrons dans le cœur permet d'obtenir une répartition radiale des puissances relativement uniforme. De plus, grâce à l'utilisation d'un seul type d'assemblages de combustible, il est possible de choisir un enrichissement uniforme en matière fissile d'environ 16% en volume, pour lequel les puissances dissipées par les assemblages restent pratiquement stables en cours de cycle, avec tous les avantages qui en découlent (accroissement du temps de séjour des assemblages dans le coeur et du rendement du réacteur, réduction du nombre des assemblages de commande, et donc de leurs mécanismes de commande).

Selon la nature des éléments de dilution des neutrons, le pourcentage de ces éléments par rapport aux assemblages de combustible nucléaire contenus dans la partie centrale de la zone fissile est compris entre 1/5 et 1/3.

En pratique, les éléments de dilution comprennent de préférence les trous de passage pour les barres de pilotage et d'arrêt. Ces trous de passage sont alors régulièrement répartis en trois rideaux concentriques situés radialement sensiblement à des distances de 1/3R, 1/2R et 2/3R du centre de la zone fissile, R étant le rayon de cette zone fissile.

Selon un mode de réalisation particulier de l'invention, les éléments de dilution des neutrons comprennent également les barres de pilotage et d'arrêt, ces barres ayant une longueur sensiblement double de la hauteur de la zone fissile et comportant une partie supérieure contenant un matériau absorbant les neutrons à forte efficacité et une partie inférieure contenant un matériau absorbant les neutrons à faible efficacité.

Selon un autre aspect intéressant de l'invention permettant d'obtenir également une répartition axiale des puissances relativement bien aplatie, chacun des assemblages constituant la zone fissile comprend, dans une partie centrale axiale, au moins une zone diluante permettant d'aplatir la distribution axiale de puissance dans cet assemblage.

Dans un mode de réalisation préféré de l'invention, la partie centrale axiale de chaque assemblage s'étend sur une longueur comprise entre 5% et 15% de la longueur totale de la zone fissile de cet assemblage.

Le combustible nucléaire se présente de façon connue sous la forme d'empilements de pastilles placées dans des gaines en acier inoxydable pour former un faisceau d'aiguilles. La zone diluante est alors obtenue en plaçant dans la partie centrale axiale de chacune de ces aiguilles soit au moins un bloc d'acier, soit au moins une structure d'acier creuse délimitant un évidement.

Dans une première variante de réalisation de l'invention, la partie centrale axiale de chaque aiguille comprend une seule zone diluante placée au centre de la zone fissile de cette aiguille.

Dans une deuxième variante de réalisation de l'invention, la partie centrale axiale de chaque aiguille comprend une première zone diluante placée au centre de la zone fissile de cette aiguille et deux zones diluantes disposées symétriquement par rapport à cette première zone.

Dans une troisième variante de réalisation de l'invention, la partie centrale axiale de chaque aiguille comprend deux zones diluantes disposées symétriquement par rapport au centre de la zone fissile de cette aiguille.

On décrira maintenant, à titre d'exemples non limitatifs, différentes variantes de réalisation de l'invention en se référant aux dessins annexés dans lesquels :

- la figure 1, déjà décrite, est une vue de dessus représentant partiellement et de façon schématique la zone centrale fissile du coeur d'un réacteur nucléaire à neutrons rapides du type Super-Phénix,

- la figure 2, déjà décrite, représente en (a) et (b) les courbes de répartition des puissances P dissipées par les assemblages fissiles en fonction de leur disposition radiale R dans le coeur, respectivement en début et en fin de cycle,

- la figure 3 est une vue comparable à la figure 1 représentant en vue de dessus et de façon schématique les zones fissile et fertile du coeur d'un réacteur nucléaire à neutrons rapides réalisé conformément à l'invention,

- la figure 4 est une vue en coupe longitudinale schématique d'un assemblage de combustible nucléaire destiné à être placé dans la zone fissile du coeur d'un réacteur nucléaire à neutrons rapides, conformément à l'invention ;

- la figure 5 est une vue en coupe longitudinale d'une aiguille de l'assemblage combustible nucléaire représenté sur la figure 4, illustrant une première variante de réalisation dans laquelle la partie centrale axiale de l'aiguille comprend une seule zone diluante constituée par un bloc d'acier ;

- la figure 6 est une vue en coupe longitudinale d'une aiguille comparable à la figure 5, illustrant une deuxième variante de réalisation de l'invention dans laquelle la partie centrale axiale comprend trois zones diluantes constituées chacune par un bloc d'acier ;

- la figure 7 est une vue en coupe longitudinale d'une aiguille comparable aux figures 5 et 6 illustrant une troisième variante de réalisation de l'invention dans laquelle la partie centrale axiale comprend deux zones diluantes constituées chacune par un bloc d'acier,

- la figure 8 est une vue en coupe longitudinale d'une aiguille comparable aux figures 5 à 7, illustrant une autre variante de réalisation de l'invention dans laquelle la partie centrale axiale de l'aiguille comprend une seule zone diluante constituée par un évidement délimité par une structure d'acier creuse,

- la figure 9 est une vue en coupe verticale d'une partie du coeur d'un réacteur nucléaire à neutrons rapides conformes à l'invention, représentant deux barres de pilotage et d'arrêt, respectivement en position haute et en position basse ; et

- la figure 10 est une vue comparable à la figure 2 représentant en (a) et (b) la répartition radiale R des puissances P des assemblages de combustible nucléaire constituant la zone fissile du coeur selon l'invention représenté sur la figure 3, respectivement en début et en fin de cycle.

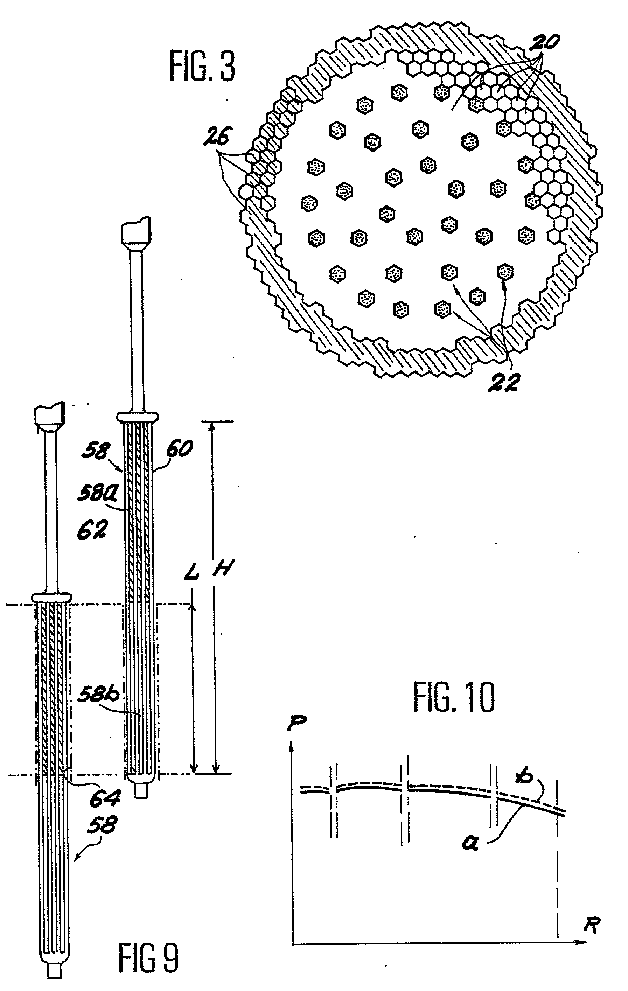

Sur la figure 3, on voit que la zone centrale fissile du coeur de réacteur nucléaire à neutrons rapides selon l'invention est constituée d'un seul type d'assemblages de combustible nucléaire 20, des éléments de dilution des neutrons 22 étant répartis de façon régulière et homogène dans la partie centrale de cette zone fissile, de façon à réduire la réactivité et, par conséquent, la puissance dans cette partie centrale.

Comme dans le coeur des réacteurs à neutrons rapides connus, les assemblages de combustible nucléaire 20 ainsi que les éléments de dilution des neutrons 22 présentent de préférence une section hexagonale et sont juxtaposés selon un réseau hexagonal régulier déterminé par cette section.

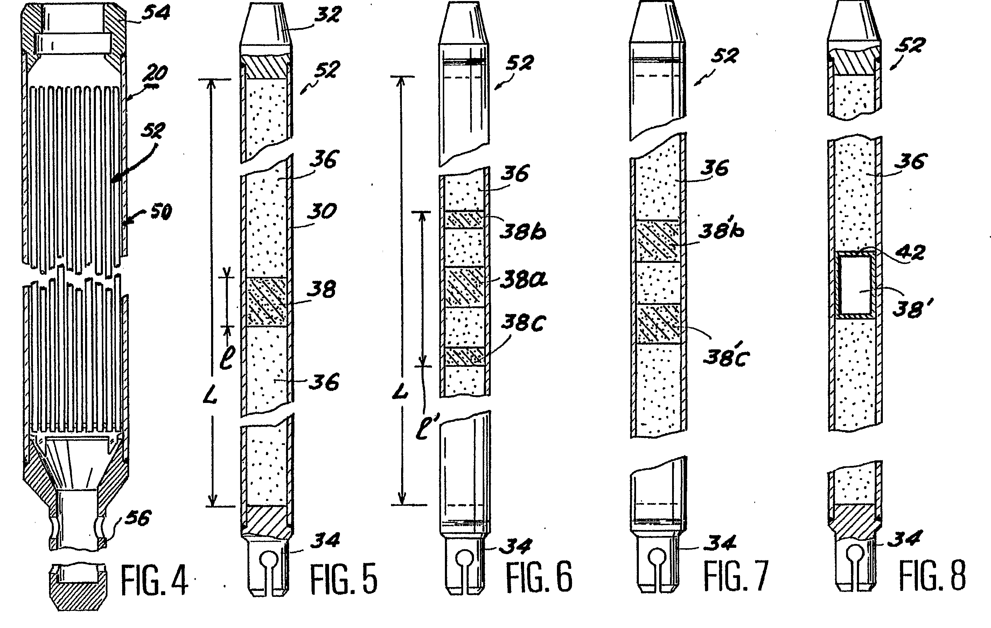

La structure de chacun des assemblages de combustible nucléaire 20 va maintenant être décrite plus en détail en se référant aux figures 4 à 8.

Sur la figure 4, on a représenté l'un des assemblages de combustible nucléaire 20 comprenant de façon connue un boîtier externe 50, généralement de section hexagonale, une tête 54 permettant la préhension et la manutention de l'assemblage à l'aide d'un outil tel qu'un grappin ou un ringard, et un pied 56 par lequel l'assemblage est supporté verticalement et alimenté en métal liquide, lorsqu'il est mis en place dans le coeur du réacteur. A l'intérieur du boîtier 50 est placé un faisceau d'aiguilles de combustible nucléaire 52 entre lesquelles circule le métal liquide servant à prélever la chaleur dégagée par la réaction nucléaire, pour la transférer jusqu'aux échangeurs de chaleur intermédiaires entre le circuit primaire et le circuit secondaire du réacteur.

Différentes variantes de réalisation des aiguilles 52 vont maintenant être décrites en se référant aux figures 5 à 8.

L'aiguille de combustible nucléaire 52 représentée sur la figure 5 comprend de façon connue une gaine 30, un bouchon 32 de fermeture supérieure, et un bouchon 34 de fermeture inférieure.

A l'intérieur de la gaine 30 est placé le combustible nucléaire 36, constitué par exemple par un empilement de pastilles formées de dioxyde de plutonium $PuO_2$ et de dioxyde d'uranium $UO_2$. Ce combustible 36 détermine la zone fissile de l'assemblage.

Conformément à l'invention, la proportion de dioxyde de plutonium $PuO_2$ par rapport à l'ensemble constitué par le dioxyde de plutonium et par le dioxyde d'uranium est uniforme dans toute la zone fissile et, de préférence, voisine de 16% en volume.

De préférence, au moins une zone diluante 38 est placée dans la zone fissile constituée par le combustible 36. Cette zone diluante 38 est située dans la partie centrale de la zone fissile, cette dernière étant considérée dans le sens de l'axe longitudinal de l'aiguille. Pour cette raison, la partie centrale dans laquelle est située la zone 38 sera appelée par la suite "partie centrale axiale" de l'aiguille.

Par rapport à la longueur totale axiale de cette zone fissile, désignée par la référence L sur la figure 5, la partie centrale axiale dans laquelle se trouve la zone diluante 38 s'étend sur une longueur l comprise de préférence entre 5% et 15% de la longueur L.

Dans le mode de réalisation représenté sur la figure 5, l'aiguille 52 comprend une seule zone diluante 38, de telle sorte que la longueur l de la partie centrale axiale de l'aiguille correspond à la longueur de cette zone 38.

Sur la figure 5, la zone diluante 38 est constituée par un bloc d'acier.

De façon connue, la zone fissile constituée par le combustible 36 est placée entre deux zones fertiles (non représentées) constituant la couverture axiale supérieure et la couverture axiale inférieure du coeur. Ce matériau fertile peut être constitué par des pastilles de dioxyde d'uranium placées dans les aiguilles au-dessus et en-dessous de la zone fertile.

La figure 6 représente une deuxième variante d'une aiguille 52 réalisée conformément à l'invention.

L'aiguille de combustible nucléaire 52 représentée sur la figure 6 présente pour l'essentiel des caractéristiques identiques à celles de l'aiguille 52 décrite précédemment en se référant à la figure 5.

La variante de réalisation de la figure 6 se distingue uniquement de la variante de réalisation de la figure 5 par le fait que la partie centrale axiale de l'aiguille comprend trois zones diluantes en acier 38a, 38b et 38c. La partie 38a est placée au centre de la zone fissile formée par le combustible nucléaire 36 et s'étend sur une longueur inférieure à la longueur l de la zone 38 dans la variante de la figure 5. Les zones diluantes 38b et 38c sont placées de part et d'autre de la zone centrale 38a et de façon symétrique par rapport à celle-ci. Leur longueur est en outre très inférieure à celle de la zone centrale 38a.

Comme dans la variante de réalisation de la figure 5, la longueur l' de la partie centrale axiale de l'aiguille 52 de la figure 5 dans laquelle se trouvent les zones diluantes 38a, 38b et 38c est comprise de préférence entre 5% et 15% de la longueur totale L de la zone fissile de cette aiguille.

La variante de réalisation de la figure 7 ne se distingue de la variante de la figure 6 que par le fait que la partie centrale axiale de l'aiguille 52 comprend deux zones diluantes en acier 38'b et 38'c placées de façon symétrique par rapport au centre de la zone fissile formée par le combustible nucléaire 36.

Dans les variantes de réalisation des figures 6 et 7, le fractionnement de la zone diluante permet, par un choix judicieux de la longueur et de la position des trois zones diluantes élémentaires 38a, 38b, 38c, ou 38'b et 38'c d'obtenir une répartition axiale des puissances aussi aplatie que possible.

Une extrapolation de cette observation conduit à penser que le fractionnement de la zone diluante en quatre zones élémentaires ou plus permet d'obtenir un aplatissement de la répartition axiale des puissances encore amélioré. Cela est bien exact, mais le faible gain en aplatissement des puissances qui en résulte est alors largement contrebalancé par la complexité de réalisation de l'aiguille.

Dans la variante de réalisation représentée sur la figure 8, l'aiguille 52 est également réalisée pour l'essentiel de façon identique à l'aiguille décrite précédemment en se référant à la figure 6.

Elle se distingue essentiellement de cette dernière par le fait qu'elle comprend une zone unique diluante 38' qui n'est plus formée ici par un bloc d'acier mais par un évidement délimité par une structure d'acier creuse 42.

Bien extendu, la variante de réalisation de la figure 8 peut être combinée avec celles des figures 6 et 7. En d'autres termes, dans les variantes de réalisation des figures 6 et 7, on peut remplacer chacun des blocs d'acier constituant les zones diluantes 38a, 38b et 38c, ou 38'b et 38'c par des évidements délimités par des structures d'acier creuses.

En plus de l'aplatissement radial des puissances obtenu grâce aux éléments diluantes régulièrement répartis parmi les assemblages dans la partie centrale radiale de la zone fissile, la présence d'au moins une zone diluante 38 dans la partie centrale axiale de chacun des assemblages permet d'aplatir axialement les puissances, sans augmenter la longueur des assemblages. Il est à noter que cette dernière caractéristique permet en outre de réduire le coût du cycle de retraitement de 15 à 20%.

L'encombrement radial de la partie centrale de la zone fissile dans laquelle sont disposés les éléments de dilution des neutrons 22 est déterminé en fonction du taux d'enrichissement des assemblages et de la taille du coeur. Dans le cas où le taux d'enrichissement est de 16% en volume et où la puissance du réacteur est de 1500 MW électriques, l'encombrement radial de cette partie centrale peut être égal, par exemple, à environ 0,55 fois l'encombrement radial de l'ensemble de la zone fissile. Lorsque l'enrichissement des assemblages fissiles 20 et la dimension du coeur varient, l'encombrement radial de la partie centrale dans laquelle sont régulièrement répartis les éléments 22 est compris de préférence entre 1/3 et 2/3 de l'encombrement radial de l'ensemble de la zone fissile.

Par ailleurs, le nombre des éléments de dilution de neutrons 22 placés dans la partie centrale de la zone fissile est déterminé en fonction de la nature et de la composition de ces éléments. De préférence, le pourcentage d'éléments de dilution de neutrons 22 situés dans la partie centrale correspondante de la zone fissile, par rapport au nombre total d'assemblages de combustible nucléaire 20 situés dans cette même partie centrale est compris entre 1/5 et 1/3. Dans le mode de réalisation représenté sur la figure 3, le nombre d'éléments de dilution 22 est de 33 alors que le nombre total d'assemblages fissiles 20 est d'environ 400.

Les éléments de dilution des neutrons 22 sont constitués par tout élément permettant de réduire localement la réactivité et, par conséquent, la puissance dans la partie correspondante du coeur.

En pratique et comme l'illustre la figure 3, ces éléments 22 peuvent être constitués simplement par les trous de passage dans lesquels sont reçues les barres de pilotage et d'arrêt du réacteur. De préférence, ces éléments 22 sont alors répartis régulièrement en trois rideaux ou couronnes concentriques disposés respectivement à une distance d'environ $1/3R$, $1/2R$ et $2/3R$, par rapport au centre de la zone fissile, si on désigne par R le rayon de cette zone fissile.

Comme l'illustre plus précisément la figure 9, les barres de pilotage et d'arrêt 58 présentent de préférence une structure particulière.

Ainsi, la longueur H de chacune des barres 58 est sensiblement double de la hauteur L de la zone fissile.

De plus, chacune des barres 58 comprend une partie supérieure 58a et une partie inférieure 58b approximativement d'égale hauteur. Les barres 58 comprenant comme les assemblages de combustible nucléaire 20 un boîtier hexagonal 60 dans lequel est logé un faisceau d'aiguilles 62, la partie supérieure des aiguilles 62 formant la partie 58a de chaque barre 58 contient un matériau absorbant les neutrons à forte efficacitè, alors que la partie inférieure formant la partie 58b contient un matériau absorbant les neutrons à faible efficacité.

De façon plus précise, la partie supérieure des aiguilles 62 contient par exemple du carbure de bore enrichi en bore 10 et assure la fonction habituelle des barres d'arrêt. Au contraire, la partie inférieure des aiguilles 62 peut contenir soit du carbure de bore naturel soit, de préférence de l'uranium appauvri sous forme d'oxyde, de carbure ou de nitrure. Cette partie inférieure assure la fonction de pilotage et un peu en combinaison avec les trous de passage 64 des barres 62 la dilution des neutrons, l'ensemble constituant ainsi un élément 22.

L'utilisation des trous de passage 64 comme éléments 22 de dilution des neutrons et plus ou moins partiellement des barres 58 assure un bon aplatissement des puissances. L'enrichissement du combustible étant uniforme dans toute la zone fissile, on parvient ainsi à un bon aplatissement des flux neutroniques.

La configuration des barres de pilotage et d'arrêt 58 qui vient d'être décrite en référence à la figure 9 permet également d'obtenir une amélioration sensible de leur durée de vie par rapport à celle des coeurs à plusieurs zones. La chute de ces barres 58 assure une efficacité maximale puisque c'est la partie supérieure en matériau absorbant à forte efficacité qui est alors introduite complètement dans la zone fissile et provoque un arrêt sûr.

Ces éléments 22 constitués par les trous de passage et par les barres 58 peuvent être complétés par des éléments inertes en acier ou par des assemblages ne comprenant pas de combustible.

Dans le cas de barres d'acier, au moins un passage longitudinal est formé afin d'assurer leur refroidissement sous l'effet de la circulation à l'intérieur de ces passages du fluide caloporteur primaire, généralement constitué par du sodium liquide, qui circule dans le coeur.

De façon connue, la zone fissile du coeur du réacteur selon l'invention est entourée par deux zones périphériques successives comprenant une première zone fertile constituée d'assemblages 26 (figure 3) en matériau fertile tel que du dioxyde

d'uranium $UO_2$ appauvri. La deuxième zone périphérique (non représentée) est constituée d'éléments de protection neutronique latérale qui comprennent généralement successivement en allant vers l'extérieur des éléments hexagonaux en acier, puis des rondins en graphite, en acier et en graphite boré. Cette deuxième zone périphérique constitue la protection neutronique latérale du coeur du réacteur.

Comme l'illustre la figure 10, la réalisation de la zone fissile du coeur d'un réacteur nucléaire à neutrons rapides conformément à l'invention permet d'obtenir une répartition radiale des puissances relativement uniforme à l'aide d'un seul type d'assemblages de combustible nucléaire, ce qui simplifie considérablement la manutention et la gestion de ce combustible.

Une autre conséquence de la stabilité des puissances en cours de cycle est qu'il n'est plus nécessaire d'utiliser les assemblages de commande pour compenser la variation de ces puissances. Il en résulte que le nombre des assemblages de commande peut être réduit d'au moins 15% par rapport à un coeur de conception classique. Dans le cas d'un coeur à chute de réactivité nulle cette diminution peut atteindre 30%.

Par ailleurs, la stabilité dans le temps des puissances dissipées par les assemblages permet d'améliorer le rendement du réacteur, puisque la puissance locale peut être relativement proche de la puissance maximale admissible sans crainte de voir cette puissance dépasser en cours de cycle le seuil maximum tolérable, par suite d'un accroîssement local de la puissance. Dans le cas d'un coeur à chute de réactivité nulle, un gain de 12°C à 15°C sur la température atteinte en moyenne par les assemblages fissiles peut ainsi être envisagé. Bien entendu, ce gain serait un peu plus faible dans le cas où la chute de réactivité ne serait pas nulle.

## Revendications

1. Cœur de réacteur nucléaire à neutrons rapides comprenant une zone fissile constituée d'assemblages de combustible nucléaire (20) parmi lesquels sont régulièrement répartis des trous de passage pour des barres de pilotage et d'arrêt contenant un matériau absorbant les neutrons, lesdits assemblages étant juxtaposés et disposés selon un réseau régulier, caractérisé en ce que
   – la zone fissile est constituée d'assemblages (20) identiques et à enrichissement unique, et
   – des éléments (22) réduisant localement la réactivité sont régulièrement répartis parmi les assemblages (20) dans une partie centrale de ladite zone fissile, cette partie centrale étant considérée selon une direction radiale par rapport au centre de la zone fissile, afin de réduire la réactivité dans cette partie centrale radiale.

2. Cœur de réacteur selon la revendication 1, caractérisé en ce que le pourcentage des éléments (22) de dilution des neutrons par rapport aux assemblages de combustible nucléaire (20) contenus dans la partie centrale de la zone fissile est compris entre 1/5 et 1/3.

3. Cœur de réacteur selon l'une quelconque des revendications 1 et 2, caractérisé en ce que les éléments (22) de dilution des neutrons comprennent les trous de passage pour les barres de pilotage et d'arrêt.

4. Cœur de réacteur selon la revendication 3, caractérisé en ce que les trous de passage pour les barres de pilotage et d'arrêt sont régulièrement répartis en trois rideaux concentriques situés radialement sensiblement à des distances de $1/3R$, $1/2R$ et $2/3R$ du centre de la zone fissile, R étant le rayon de cette zone fissile.

5. Cœur de réacteur selon l'une quelconque des revendications 3 et 4, caractérisé en ce que les éléments (22) de dilution des neutrons comprennent également les barres de pilotage et d'arrêt, ces barres ayant une longueur sensiblement double de la hauteur de la zone fissile et comportant une partie supérieure contenant un matériau absorbant les neutrons à forte efficacité et une partie inférieure contenant un matériau absorbant les neutrons à faible efficacité.

6. Cœur de réacteur selon la revendication 5, caractérisé en ce que le matériau absorbant les neutrons à forte efficacité est du carbure de bore enrichi en bore 10 et en ce que le matériau absorbant les neutrons à faible efficacité est choisi dans le groupe comprenant le carbure de bore naturel, l'oxyde d'uranium appauvri, le carbure de bore appauvri et le nitrure de bore appauvri.

7. Cœur de réacteur selon l'une quelconque des revendications 3 à 6, caractérisé en ce que les éléments (22) de dilution des neutrons comprennent de plus des barres d'acier présentant chacune au moins un passage longitudinal de refroidissement.

8. Cœur de réacteur selon l'une quelconque des revendications 3 à 7, caractérisé en ce que les éléments (22) de dilution des neutrons comprennent de plus des assemblages vides de combustible.

9. Cœur de réacteur selon l'une quelconque des revendications 1 à 8, caractérisé en ce que chacun des assemblages (20) constituant la zone fissile comprend, dans une partie centrale axiale, au moins une zone diluante (38, 38a, 38b, 38c; 38'b, 38'c; 38') permettant d'aplatir la distribution axiale de puissance dans cet assemblage.

10. Cœur de réacteur selon la revendication 9, caractérisé en ce que la partie centrale axiale de chaque assemblage s'étend sur une longueur (l) comprise entre 5% et 15% de la longueur totale (L) de la zone fissile (36) de cet assemblage.

11. Cœur de réacteur selon l'une quelconque des revendications 9 et 10, caractérisé en ce que, les assemblages comprenant un faisceau d'aiguilles, chacune des zones diluantes (38, 38a, 38b, 38c; 38'b, 38'c) comprend au moins un bloc d'acier placé dans chaque aiguille (52).

12. Cœur de réacteur selon l'une quelconque des revendications 9 et 10, caractérisé en ce que, les assemblages comprenant un faisceau d'aiguilles, chacune des zones diluantes (38') comprend au moins un évidement (38') délimité dans chaque aiguille (52) par une structure d'acier creuse (42).

13. Cœur de réacteur selon l'une quelconque des revendications 9 à 12, caractérisé en ce que la partie centrale axiale de chaque assemblage comprend une seule zone diluante (38, 38') placée au centre de la zone fissile (36) de cet assemblage.

14. Cœur de réacteur selon l'une quelconque des revendications 9 à 12, caractérisé en ce que la partie centrale axiale de chaque assemblage comprend une première zone diluante (38a) placée au centre de la zone fissile de cet assemblage et deux zones diluantes (38b, 38c) disposées symétriquement par rapport à ladite première zone de dilution des neutrons.

15. Cœur de réacteur selon l'une quelconque des revendications 9 à 12, caractérisé en ce que la partie centrale axiale de chaque assemblage comprend deux zones diluantes (38'b, 38'c) disposées symétriquement par rapport au centre de la zone fissile de cet assemblage.

**Claims**

1. Fast-neutron nuclear reactor core comprising a fissile zone consisting of nuclear fuel assemblies (20) among which there are regularly distributed holes for passage of control rods and shutdown rods containing a material absorbing the neutrons, the said assemblies being juxtaposed and disposed according to a regular network, characterized in that
   – the fissile zone consists of assemblies (20) which are identical and have single enrichment, and
   – elements (22) locally reducing the reactivity are regularly distributed among the assemblies (20) in a central part of the said fissile zone, this central part being considered along a radial direction in relation to the centre of the fissile zone, in order to reduce the reactivity in this radial central part.

2. Reactor core according to Claim 1, characterized in that the percentage of the elements (22) for the dilution of the neutrons in relation to the nuclear fuel assemblies (20) contained in the central part of the fissile zone is within the range between 1/5 and 1/3.

3. Reactor core according to either one of Claims 1 and 2, characterized in that the elements (22) for the dilution of the neutrons comprise the holes for passage of the control rods and shutdown rods.

4. Reactor core according to Claim 3, characterized in that the holes for passage of the control rods and shutdown rods are regularly distributed in three concentric curtains situated radially substantially at distances of $1/3R$, $1/2R$ and $2/3R$ from the centre of the fissile zone, R being the radius of this fissile zone.

5. Reactor core according to either one of Claims 3 and 4, characterized in that the elements (22) for the dilution of the neutrons likewise comprise the control rods and shutdown rods, these rods having a length which is substantially twice the height of the fissile zone and comprising an upper part containing a material absorbing the neutrons with high effectiveness and a lower part containing a material absorbing the neutrons with low effectiveness.

6. Reactor core according to Claim 5, characterized in that the material absorbing the neutrons with high effectiveness is boron carbide enriched with boron 10, and in that the material absorbing the neutrons with low effectiveness is chosen within the group comprising natural boron carbide, impoverished uranium oxide, impoverished boron carbide and impoverished boron nitride.

7. Reactor core according to any one of Claims 3 to 6, characterized in that the elements (22) for the dilution of the neutrons further comprise steel bars each exhibiting at least one longitudinal cooling passage.

8. Reactor core according to any one of Claims 3 to 7, characterized in that the elements (22) for the dilution of the neutrons further comprise assemblies which are empty of fuel.

9. Reactor core according to any one of Claims 1 to 8, characterized in that each one of the assemblies (20) constituting the fissile zone comprises, in an axial central part, at least one diluting zone (38, 38a, 38b, 38c; 38'b, 38'c; 38') permitting the smoothing out of the axial power distribution in this assembly.

10. Reactor core according to Claim 9, characterized in that the axial central part of each assembly extends over a length (1) within the range between 5% and 15% of the total length (L) of the fissile zone (36) of this assembly.

11. Reactor core according to either one of Claims 9 and 10, characterized in that, the assemblies comprising a bundle of needles, each one of the diluting zones (38, 38a, 38b, 38c; 38'b, 38'c) comprises at least one steel block placed within each needle (52).

12. Reactor core according to either one of Claims 9 and 10, characterized in that, the assemblies comprising a bundle of needles, each one of the diluting zones (38') comprises at least one recess (38') delimited in each needle (52) by a hollow steel structure (42).

13. Reactor core according to any one of Claims 9 to 12, characterized in that the axial central part of each assembly comprises a single diluting zone (38, 38') placed at the centre of the fissile zone (36) of this assembly.

14. Reactor core according to any one of Claims 9 to 12, characterized in that the axial central part of each assembly comprises a first diluting zone (38a) placed at the centre of the fissile zone of this assembly and two diluting zones (38b, 38c) disposed symmetrically in relation to the said first zone for the dilution of the neutrons.

15. Reactor core according to any one of Claims 9 to 12, characterized in that the axial central part of each assembly comprises two diluting zones (38'b, 38'c) disposed symmetrically in relation to the centre of the fissile zone of this assembly.

**Patentansprüche**

1. Kern eines schnellen Kernreaktors mit einer Spaltungszone, die aus Brennstoffbündeln (20) besteht, zwischen denen regelmäßig Durchlaßöffnungen für Regel- und Sicherheitsstäbe verteilt sind, die ein die Neutronen absorbierendes Material enthalten, wobei die Bündel nebeneinander in einem regelmäßigen Netzwerk angeordnet sind, dadurch gekennzeichnet, daß

— die Spaltungszone aus identischen Bündeln (20) aus einmaliger Anreicherung besteht und daß

— Elemente (22), die lokal die Reaktivität vermindern, regelmäßig zwischen den Bündeln in einem zentralen Bereich der Spaltungszone verteilt sind, wobei dieser zentrale Bereich entlang einer radialen Richtung in bezug auf das Zentrum der Spaltungszone betrachtet wird, um die Reaktivität dieses zentralen, radialen Bereichs zu vermindern.

2. Reaktorkern nach Anspruch 1, dadurch gekennzeichnet, daß der Prozentsatz der die Neutronen verdünnenden Elemente (22) in bezug auf die Brennstoffbündel (20), die in dem zentralen Bereich enthalten sind, zwischen 1/5 und 1/3 liegt.

3. Reaktorkern nach einem der Ansprüche 1 und 2, dadurch gekennzeichnet, daß die die Neutronen verdünnenden Elemente Durchlaßöffnungen für Pegel- und Sicherheitsstäbe aufweisen.

4. Reaktorkern nach Anspruch 3, dadurch gekennzeichnet, daß die Durchlaßöffnungen für die Steuer- und Sicherheitsstäbe regelmäßig über drei konzentrische Vorhänge verteilt sind, die sich radial genau an den Abständen 1/3 R, 1/2 R und 2/3 R vom Zentrum der Spaltungszone befinden, wobei R der Radius dieser Spaltungszone ist.

5. Reaktorkern nach einem der Ansprüche 3 und 4, dadurch gekennzeichnet, daß die die Neutronen verdünnenden Elemente (22) ebenfalls die Steuer- und Sicherheitsstäbe aufweisen, wobei diese Stäbe eine Länge von genau der doppelten Höhe der Spaltungszone besitzen und einen oberen Teil, der ein Material enthält, das mit hoher Effektivität Neutronen absorbiert, und einen unteren Teil aufweisen, der ein Material enthält, das mit geringer Effektivität Neutronen absorbiert.

6. Reaktorkern nach Anspruch 5, dadurch gekennzeichnet, daß das mit hoher Effektivität Neutronen absorbierende Material mit Bor 10 angereichertes Borkarbid ist und daß das mit geringer Effektivität Neutronen absorbierende Material aus der Gruppe ausgewählt wird, die das Karbid des natürlichen Bors, abgereichertes Uranoxid, das Karbid von abgereichertem Bor und das Nitrid von abgereichertem Bor aufweist.

7. Reaktorkern nach einem der Ansprüche 3 bis 6, dadurch gekennzeichnet, daß die die Neutronen verdünnenden Elemente (22) zusätzlich Stahlstäbe aufweisen, die jeweils wenigstens eine longitudinale Abkühlpassage bilden.

8. Reaktorkern nach einem der Ansprüche 3 bis 7, dadurch gekennzeichnet, daß die die Neutronen verdünnenden Elemente (22) zusätzlich leere Brennstoffbündel aufweisen.

9. Reaktorkern nach einem der Ansprüche 1 bis 8, dadurch gekennzeichnet, daß jedes Bündel (20) die die Spaltungszone bilden, in einem axialen, zentralen Bereich wenigstens einen verdünnenden Bereich (38, 38a, 38b, 38c; 38′b, 38′c; 38′) aufweist, der erlaubt, die axiale Leistungsverteilung in dieser Anordnung abzuflachen.

10. Reaktorkern nach Anspruch 9, dadurch gekennzeichnet, daß sich der zentrale, axiale Bereich jeder Anordnung über eine Länge (2) zwischen 5% und 15% der Gesamtlänge (L) der Spaltungszone (36) dieser Anordnung erstreckt.

11. Reaktorkern nach einem der Ansprüche 9 und 10, dadurch gekennzeichnet, daß, wenn die Anordnungen ein Bündel von Nadeln aufweisen, jeder der verdünnenden Bereiche (38, 38a, 38b, 38c; 38′b, 38′c; 38′) wenigstens einen in jeder Nadel (52) angeordneten Stahlblock aufweist.

12. Reaktorkern nach einem der Ansprüche 9 und 10, dadurch gekennzeichnet, daß, wenn die Anordnungen ein Bündel von Nadeln aufweisen, jeder der verdünnenden Bereiche (38′) wenigstens eine Vertiefung (38′) aufweist, die in jeder Nadel (52) durch eine Struktur aus Gußstahl begrenzt wird.

13. Reaktorkern nach einem der Ansprüche 9 bis 12, dadurch gekennzeichnet, daß der zentrale, axiale Bereich jeder Anordnung eine verdünnende Zone (38, 38′) aufweist, die sich in der Spaltungszone (36) dieser Anordnung (36) befindet.

14. Reaktorkern nach einem der Ansprüche 9 bis 12, dadurch gekennzeichnet, daß der zentrale, axiale Bereich jeder Anordnung eine erste verdünnende Zone (38a), die im Zentrum der Spaltungszone angeordnet ist, und zwei verdünnende Zonen (38b, 38c), die symmetrisch bezüglich der ersten Neutronen verdünnenden Zone angeordnet sind, aufweist.

15. Reaktorkern nach einem der Ansprüche 9 bis 12, dadurch gekennzeichnet, daß der zentrale, axiale Bereich jeder Anordnung zwei verdünnende Zonen (38′b, 38′c) aufweist, die symmetrisch bezüglich der Mitte der Spaltungszone dieser Anordnung angeordnet sind.

FIG. 1

FIG. 2

FIG. 3

FIG 9

FIG. 10

FIG. 8

FIG. 7

FIG. 6

FIG. 5

FIG. 4